Europäisches Patentamt

**European Patent Office**

**Office européen des brevets**

(19)

(11) Publication number: **0 004 887**
**B1**

(12)

# EUROPEAN PATENT SPECIFICATION

(45) Date of publication of patent specification: **07.10.81**

(21) Application number: **79100951.7**

(22) Date of filing: **30.03.79**

(51) Int. Cl.³: **H 04 J 3/06, H 04 B 7/185, H 04 L 7/02**

(54) Method and device for synchronizing digital transmissions via satellite.

(30) Priority: **04.04.78 IT 6772978**

(43) Date of publication of application:
**31.10.79 Bulletin 79/22**

(45) Publication of the grant of the European patent:
**07.10.81 Bulletin 81/40**

(84) Designated Contracting States:
**DE FR GB NL SE**

(56) References cited:
DE - A - 1 800 678
FR - A - 2 230 129
GB - A - 965 699
GB - A - 1 422 150
US - A - 2 973 407
US - A - 3 241 075
US - A - 3 509 471

1977 INTERNATIONAL CONFERENCE ON.
COMMUNICATIONS CONFERENCE RECORD.

12—15 June 1977, Chicago, IEE, New York, C.L.
CUCCIA et al: "Baseline considerations of beam
switched SSTDMA satellites using baseband
switching matrix", pages 6.3.126 to 6.3-131

(73) Proprietor: **CSELT Centro Studi e Laboratori
Telecomunicazioni S.p.A.**
**Via Guglielmo Reiss Romoli, 274**
**I-10148 Turin (IT)**

(72) Inventor: **Cordaro, Giovanni**
**V.Fratelli Rosselli n.1**
**Milena-Caltanisetta (IT)**
Inventor: **Dall'Olio, Cristiano**
**Via Tolstoi 24-1**
**Milano (IT)**
Inventor: **Di Pino, Duccio**
**V. dei Castagni, 18**
**Pino Torinese Torino (IT)**
Inventor: **Guarene, Eugenio**
**Via Massena, 94**
**Turin (IT)**

(74) Representative: **Frhr. Riederer v. Paar, Anton Dipl.-
Ing.**
**Müllerstrasse 31**
**D-8000 München 5 (DE)**

Courier Press, Leamington Spa, England.

Method and device for synchronizing digital transmissions via satellite

The present invention relates to digital transmissions via satellite with time-division multiplex-access, and more particularly it relates to a method and a device, operating on board of a regenerative satellite which receives bursts of information signals comprised of information symbols and an earth clock information, for synchronizing with the timing of an on-board clock signal of the satellite the information bits or symbols received and regenerated with the timing of the emitting earth stations, in discontinuous digital transmissions, said regenerated symbols being present at the same time as the earth clock signals.

It is known that according to the principle of the time-division multiplex-access (hereinafter referred to as TDMA) each transmission channel towards the satellite carries the signals of a plurality of ground stations, each one of said stations emitting information in digital form at regular time intervals ("burst" transmission).

The emission of information from each ground station in the time window allotted thereto is controlled by its own timing which can be linked with that of the satellite or can be plesiochronous with it (that is the two timings are generated by two different oscillators nominally at the same frequency).

At reception on the satellite, the frequency and the phase of the earth timing, at which the regenerator supplies the bits or the symbols, are ordinarily different from those of the on-board timing, even if the timings are linked. In fact the earth clock signal, recovered on board, is affected by many interferences such as the Doppler effect, timing shifts between the various stations accessing the same channel, tolerances in the transmitter operation, and so on. Consequently, after the regeneration and before any other processing of the signal effectuated with the on board clock signal, a synchronisation must be carried out in order to link the sequence of the symbols received and extracted from the regenerator to the timing of the on-board processing devices.

For PCM transmissions, i.e. transmissions of a continuous signal stream, it has been known (FR-publication 2230129) that for the synchronisation two special pulses in the remote and local clock respectively are monitored and when they overlap the sampling waveform is changed to compensate for the signal drift. This requires a continuous monitoring of the two clocks, as the alternation between the two waveforms ¯may become necessary in unpredictable instants. This makes the circuit complex.

For a discontinuous signal transmission by bursts, the simplest way to obtain the synchronization would seem to be the use of a buffer memory able to store a certain number of symbols, for instance three, which can be written upon command of the earth timing extracted from the regenerator and read upon command of the on-board timing, as it is known from 1977 International Conference on Communications Conference Record, 12—15 June 1977, Chicago, IEEE, New York.

Such "store and forward" mode of operation requires buffers of considerable size, which not only creates problems of installation on board of the satellite but also suffers from the following inconveniences:

During transmissions of the considered type, it is essential for the transmitting earth station to be immediately notified of the phase-shift of the burst as received by the satellite, with respect to the time window allotted to the station; the presence of a buffer memory would mask, at the earth station, a shift of magnitude till its own capacity, and so would require greater guard intervals between adjacent bursts, hindering a better exploitation of the channel capacity.

Consequently, the aim of the invention is that of providing a method and a device able to carry out the frequency and phase corrections necessary to synchronize the regenerated earth clock signals with the on-board clock signals, and able to operate so that said corrections do not cause losses of useful information and that the synchronism recovery takes place without increases in the guard times.

According to the invention, the method for synchronizing as initially defined consists in the operations of:

— detecting a phase discontinuity or an absence of signal in said earth timing, in order to recognize the starting of a burst;

— generating a first waveform with a frequency twice the on-board clock frequency;

— inverting said first waveform in order to generate a second waveform with a frequency twice the on-board clock frequency;

— storing, for the whole burst duration, the logic value presented by one of said waveforms at the central instant of the first received symbol period;

— selecting, on the basis of the stored logic value, one of said waveforms;

— extracting from the selected waveform, a third waveform, having a frequency equal to the on-board clock frequency and a phase such that its leading edges are spaced by integer multiples of the symbol period from the leading edge of the selected waveform spaced from the central instant of the first sampled symbol period by a time less than 1/4 of the period of the earth clock;

— sampling with the leading edges of said third waveform the regenerated symbols, so as to obtain a frame where such samples provide symbols occurring at a frequency equal to the on-board clock frequency and phase dependent on the earth clock phase;
— extracting from said first waveform a fourth waveform with frequency and phase coincident with those of the on-board clock;
— sampling with the leading edges of this fourth waveform the symbols obtained as a result of the sampling performed with the third waveform, so as to obtain a frame in which such samples provide symbols occurring at the same frequency and phase as the on-board clock.

Thus, the invention concerns a discontinuous signal transmission (transmission by bursts) and the choice of the sampling waveform is decided at the beginning of each burst by using the zones between adjacent bursts and the first bit of the burst and is maintained for the whole duration thereof. The alternation between the two waveforms may occur only in predetermined instants, and the synchronization circuit is therefore quite simple.

An object of the invention is also the device realizing the above-cited method.

These and other characteristics of the invention will become clearer from the following description of a preferred embodiment thereof, given by way of example and not in limiting sense, taken in connection with the annexed drawings, in which:

Fig. 1 is a simplified scheme of a transmission system via satellite, making use of the device object of the invention;

Fig. 2 is a circuit scheme of the device according to the invention;

Fig. 3 is a diagram of the timing signals illustrating the operation of the invention.

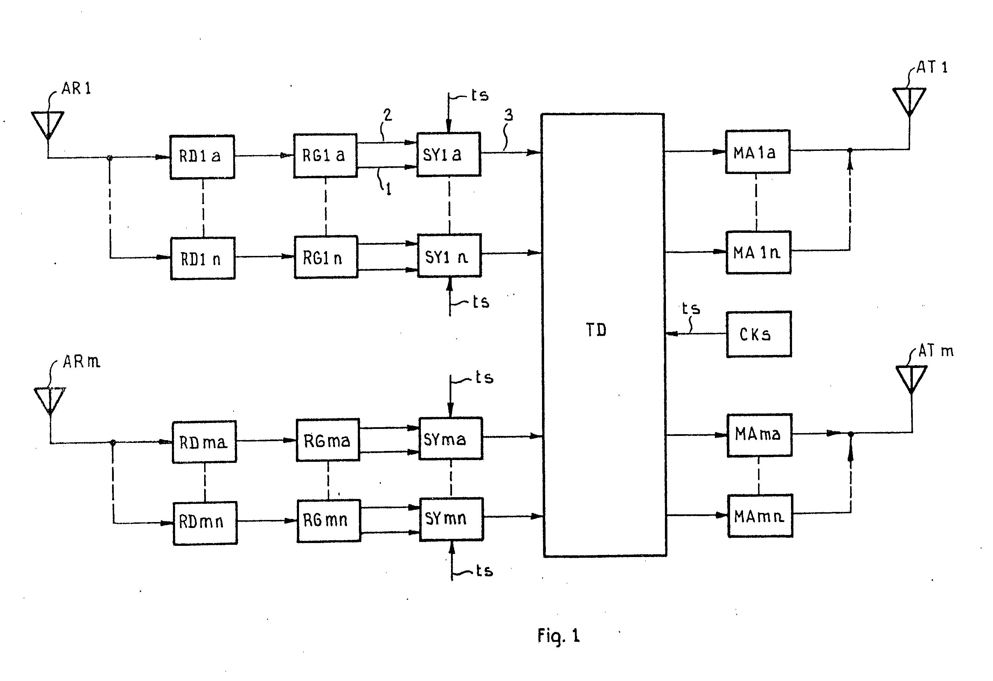

Fig. 1 shows a simplified scheme of the receiving and transmitting apparatus of a regenerative satellite with on-board timing for a digital transmission in TDMA realized by "burst", that is by discontinuous emissions from the various earth stations.

The system comprises a plurality of receiving antennas AR1 ... ARm receiving each signals transmitted on a plurality of channels. To each of the channels, a plurality of earth stations has multiplex access in time-division.

The antennas AR1 ... ARm are connected to a plurality of Receiver-demodulators RD1a ... RD1n ... RDma ... RDmn relative each to one channel; the receiver-demodulators supply the demodulated signals to regenerators RG1a ... RG1n, RGma ... RGmn, generating at the output on a wire or connection 1 the data sampled according to the timing by earth clock signals; on another output 2, there are the earth clock signal, extracted from the data flow. These signals have a phase $\varphi t$ and a frequency ft that, both in the case of plesiochronous timing and in the case of linked timing, present certain differences and/or uncertainties with respect to the phase $\varphi_s$ and the frequency $f_s$ of the one-board clock by which the signal processing is carried out in the satellite.

For this reason the regenerated signals, before being sent to a device TD processing the data, must be let through synchronizers SY1a ... SY1n .., SYma ... SYmn, which are designed to adapt the earth clock signals to on-board clock signals ts of the satellite.

More particularly, the synchronizers SY, forming the object of the invention, must:
— operate a frequency conversion, so as to convert to the nominal operating frequency fs generated by an on-board timing device $CK_s$ the frequency ft of the signal at the output of the respective regenerator RG;
— operate a phase correction in the transitions between two adjacent emissions, so that phase discontinuities may be eliminated in the bit sequence sent to the input of the data processing device TD.

When carrying out these two functions, bit shifts, which might be originated by the above-cited corrections, must be prevented from giving rise to information loss or from requiring an increased guard interval between adjacent emissions.

These corrections can be made, provided inside one burst the difference between the frequency ft of the earth clock signal extracted by the regenerators and the frequency fs of the on-board clock signal is less than 1/4 of the symbol time; this condition is satisfied in case of linked or plesiochronous timing with high stability, and for normal values of eccentricity and inclination of the orbit.

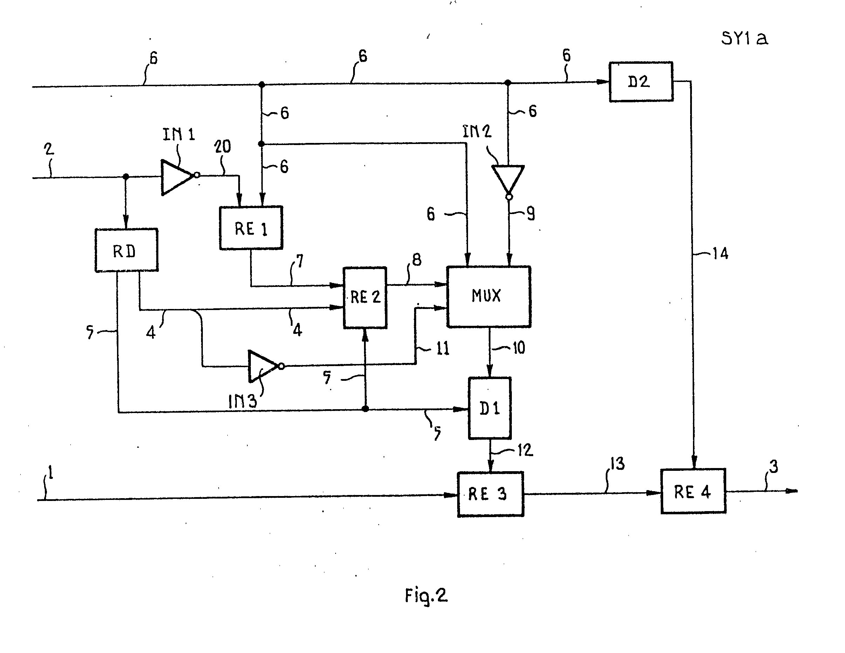

The structure of one of the synchronizers SY, e.g. SYa, will be described later in greater detail with reference to Fig. 2.

The signals outgoing from the synchronizers on connections 3 undergo the necessary processing operations (in the simplest case, a base-band switching) inside the processing data device TD, at the on-board timing by the clock signals ts; then the signals processed in TD are sent to a plurality of modulator-amplifiers MA1a ... MA1n, MAma ... MAmn which convert them into the format suitable for retransmission towards the earth and then supply them to the transmitting antennas AT1 ... ATm.

In Fig. 2, reference RD denotes a discontinuity detector which receives from the regenerator RG1a (Fig. 1) the earth clock signals present on wire 2 and detects the phase discontinuity or the absence of signals in the interval between two subsequent emissions. At the output from RD, on wires 4, 5, there are present two signals that are at 0 for the whole interval between two bursts and pass to 1 after recognition of the beginning of a burst. More particularly, the signal present on wire 4 passes to 1 in correspondence with the first leading edge of the earth clock signal subsequent to the beginning of the burst and the signal present on wire 5 passes to 1 in correspondence with the first trailing edge. A device carrying out these functions is known to the skilled in the art and so it will be no further described.

Reference RE1 denotes a usual register that stores, at the instants established by the trailing edges of the earth clock signal, the logic level of a signal with frequency 2fs, i.e. twice the frequency of the on-board clock signal. The above mentioned trailing edges of the earth clock signal are supposed to correspond to the centre of the symbols outgoing from the regenerator on wire 1.

The control signal for RE1, present on a wire 20, is obtained from the signal present on wire 2 by means of the inverter IN1, whereas the signal at frequency 2fs is present on a wire 6 coming from device CKs (Fig. 1).

A second register RE2 has the task of storing, for the whole duration of a burst, the value read by RE1 at the beginning of the same burst. RE2 receives this value through wire 7 and presents it on its output 8 upon command of the signal present on wire 4; RE2 has also a "clear" input connected to wire 5.

The output 8 of RE2 is connected to the select input of a two-input and one-output multiplexer MUX. The two inputs of MUX are connected respectively to wire 6 and to a wire 9 on which a signal is present, obtained by inverting, by means of an inverter IN2, the signal present on wire 6. MUX connects to the output 10 the input 6 or the input 9 dependent on whether on wire 8 there is present a signal at level $0$ or at level $1$; taking into account that on wire 8 there is present the logic value that the signal on the wire 6 had in correspondence with the first trailing edge of the earth clock and that the signal on wire 9 is the inversion of the one present on wire 6, at the output 10 of MUX the signal will be present having a frequency twice the on-board clock frequency and being at $0$ at said instant.

The operation of the multiplexer MUX is enabled by the signal present on a wire 11, obtained by delaying by means of one or a plurality of inverters IN3 the signal present on wire 4. The presence of the inverter IN3 causes the enabling signal for MUX to arrive with a low delay with respect to the control signal.

Output 10 of MUX is connected to the input of a divider D1, realized by means of a flip-flop of the type J—K, controlled by the trailing edges of the signal present on wire 10 and disabled by the signal present on wire 5.

The output 12 of D1 is connected to the select input of a register RE3, that receives from the regenerator, through wire or connection 1, the symbols of the various bursts and loads them at the instants established by the trailing edge of the signal present on wire 12. Consequently, at the output from RE3 there are present symbols with the frequency of the on-board clock and with a phase dependent on the earth clock.

Reference RE4 denotes a further register, storing the symbols present on wire or connection 13 every time it receives through a wire 14 a signal from a divider D2, identical to D1. On the output 14 of D2 there is present the actual on-board clock signal. Thus, RE4 aligns in phase with said clock signal the signals present on the output 13 of RE3, anticipating or delaying them by a 1/4 of period depending on what had been the signal selected for MUX.

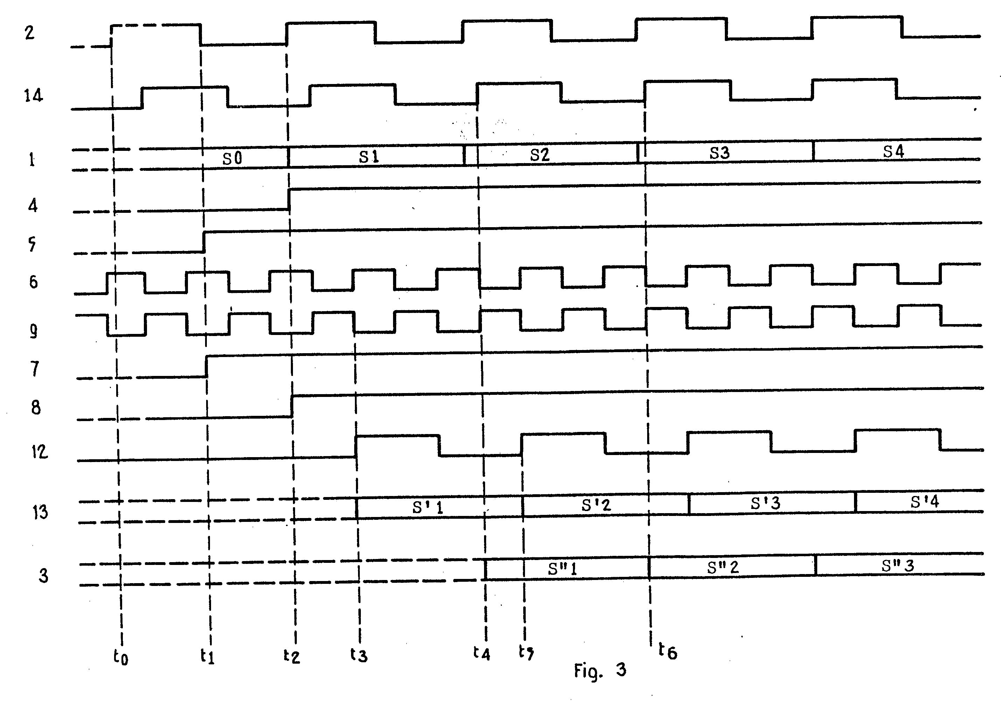

Now the operation of the device according to the invention will be described, with reference also to Fig. 3, showing the behaviour of the signals present on the various wires of SY, beginning from the beginning of a burst. To make it more understandable, the frequency difference between the on-board and the earth timing has been emphasized. In the drawing, dotted horizontal lines denote, for the signals with earth timing, the uncertainty or discontinuity zone separating the considered burst from the previous one, which zone, as seen, partially overlaps the time allotted to the first bits of the burst: yet in transmissions of this type, as known, the first bits generally have no information contents, that is why the uncertainty causes no information loss.

Independently of the number of these bits, it is important that the uncertainty should end before the trailing edge of the earth clock signal period that immediately precedes the arrival of the first imformative bit, because otherwise the regular operation of the synchronizer would be prevented. That can be easily obtained by means of known regeneration devices.

For simplicity sake, only the first bit of the burst is supposed to precede the arrival of the information bits.

In the drawing, the lines show waveforms numbered by the same number as the wires or connections on which they are present. $t_0$ to $t_6$ designate instants of particular interest.

That being stated, the instant $t_0$ is the instant at which theoretically the new burst begins. At this instant, RD (Fig. 2) has already recognized the discontinuity between the two bursts and so its output signals are at $0$. That means that register RE2 and divider D1 are disabled.

At the arrival of the first trailing edge of the earth clock signal present on wire 2 (instant $t_1$, Fig. 3), supposed to be coincident with the centre of the symbol SO coming on wire or connection 1 from the regenerator, the output 5 of RD passes to $1$, enabling RE2 and D1; in addition, RE1 stores the logic value of the signal present on wire 6, that as this instant is at $1$, and presents it on the output 7.

At the arrival of the subsequent leading edge of the earth clock signal (instant $t_2$, Fig. 3) the signal present on wire 4 passes to $1$; consequently, RE2 can transfer on output 8 the signal present on wire 7, which signal has the level $1$ so that the multiplexer MUX, enabled slightly later with respect to the switching of wire 7 in order to avoid risks at its output 10, switches through the signal of input 9 and transfers it to D1. D1 divides the frequency by two and supplies on output 12 a signal at the on-board clock signal frequency, with leading edges that appear every second trailing edge of the signal present on wire 9, beginning from the instant $t_3$ at which the first of said trailing edges subsequent to the control instant $t_2$ of MUX arrives.

At this instant register RE3 can store the present datum on wire or connection 1, that is the bit S1, and presents it as bit S'1 on output 13. The subsequent datum (bit S2) will be stored in correspondence with the second leading edge of the signal present on wire 12 (instant $t_5$) and so on.

The bits S1, S2,... stored by RE3 flow in succession as bits S'1, S'2,... on wire 13 at the frequency of the on-board clock signal; yet, as can be seen, they are still out of phase with respect to the on-board clock signal.

At the instants $t_4$, $t_6$, (leading edges of the signal on wire 14, subsequent to the storage by RE3) the bits S'1, S'2,... are stored by RE4 and presented at the output as bits S''1, S''2,... aligned with the on-board clock, apart from the internal delays introduced by the various components.

The operations go on unchanged for the subsequent bits till the end of the burst and, if there is no clock signal discontinuity between subsequent bursts, till the end of a frame. In case of discontinuity, the operations for choosing the sampling waveform are repeated as already described.

As it can be seen, the time difference between the bits S1, S2,... at input 1 and the bits S''1, S''2,... at output 3 of the synchronizer SY is less than a bit time. Besides, in the correction the bit S0 is lost; said bit is the only one that, being affected by the above-cited uncertainties, could give rise to discontinuities.

It is clear that, if within a burst the phase difference between the earth clock signal and the on-board clock signal is less than 1/4 of a period, the choice of the waveform edge that controls the sampling (first trailing edge of the chosen wave, after the instant $t_1$) is kept valid for the whole burst, in the opposite case it would be necessary to change the sampling instant and so there would be information loss.

What is described has been given by way of example and not in a limiting sense, and modifications and variations may be designed without going out of the scope of the invention.

For instance, at the instant $t_1$, the waveform with value *1* can be chosen instead of the one at *0*, and/or the leading edges instead of the trailing edges of the chosen wave can be considered. Generally, it can be said that once the waveform has been chosen, the sampling is controlled by the edge lying a distance less than 1/4 of the bit period from the centre of the arriving symbols.

## Claims

1. Method for synchronizing with the timing of an on-board clock signal of a regenerative satellite receiving bursts of information signals comprised of information symbols and an earth clock information, informations symbols (S0, S1, S2, S3, S4,...) regenerated with the timing of the emitting earth stations, in discontinuous digital transmissions, in which the earth stations have time division multiplex access to the respective transmission channels, said regenerated symbols being present at the same time as earth clock signals, characterized in that it consists in the operations of:

— detecting a phase discontinuity or an absence of signal in said earth timing, in order to recognize the starting of a burst;

— generating a first waveform (6) with a frequency twice the on-board clock frequency;

— inverting said first waveform (6) in order to generate a second waveform (9) with a frequency twice the on-board clock frequency;

— storing, for the whole burst duration, the logic value presented by one of said waveforms (6, 9) at the central instant of the first received symbol period (S0);

— selecting, on the basis of the stored logic value, one of said waveforms;

— extracting from the selected waveform, a third waveform (12), having a frequency equal to the on-board clock frequency and a phase such that its leading edges are spaced by integer multiples of the symbol period from the leading edge ($t_3$) of the selected waveform spaced from the central instant of the first sampled symbol period (S1) by a time less than 1/4 of the period of the earth clock;

— sampling with the leading edges of said third waveform (12) the regenerated symbols (1), so as to obtain a frame where such samples provide symbols (13; S'1, S'2, ...) occurring at a frequency equal to the on-board clock frequency and phase dependent on the earth clock phase;

— extracting from said first waveform a fourth waveform (14) with frequency and phase coincident with those of the on-board clock;

— sampling with the leading edges of this fourth waveform (14) the symbols obtained as a result of the sampling performed with the third waveform (12), so as to obtain a frame in which such samples provide symbols (3; S''1, S''2 ...) occurring at the same frequency and phase as the on-board clock.

2. Device for realizing the method according to claim 1, characterized in that is comprises:

— a discontinuity detector (RD) able to recognize the possible discontinuity between two bursts or subsequent frames of regenerated symbols (2), and to generate a first and a second output signal (4, 5) which are at 0 during said discontinuities and pass to 1 in correspondence with the first leading edge (t2), or respectively of the first trailing edge (t1), of the earth clock signal subsequent to the begining of the burst;

— a first and a second register (RE1, RE2) jointly able to store, for the whole duration of a burst or of a frame, the logic value that a first waveform (6) with a frequency twice the frequency of the on-board clock signal (ts) presents in correspondence with the central instant of the period of the received symbol (1);

— a multiplexer (MUX) with two inputs and one output, controlled by the value (7, 8) stored by said registers (RE1, RE2) and able to transfer to the output a first waveform (6) with a frequency twice the frequency of the on-board clock signal, or a second waveform (9) of the same frequency but shifted with respect to the first one by 1/4 the period of the on-board timing;

— a first frequency divider (D1), able to divide by two the frequency of the signal (10) outgoing from the multiplexer (MUX);

— a third register (RE3) able to present at the output (13, S'1, S'2, . . .) upon command of the signal (12) obtained in said frequency divider (D1), the regenerated symbols (1, S1, S2, . . . ) present at its input;

— a second frequency divider (D2) able to divide by two the frequency of said first waveform (6) and to supply at the output a signal (14) forming the on-board clock signal;

— a fourth register (RE4) able to sample the bits (S'1, S'2, . . .) outgoing from said third register upon command of the signal (14) outgoing from said second divider (D2) and to supply at the output the regenerated symbols (3, S''1, S''2, . . . ) with a timing matched with the on-board clock signal.

Revendications

1. Procédé pour synchroniser avec le rythme d'un signal d'horloge de bord d'un satellite régénérateur, qui reçoit des émissions (bursts) de signaux d'information comprenant des symbols d'information et une information d'horloge terrestre, des symboles d'information (S0, S1, S2, S3, S4 . . .) régénérés suivant l'horloge propre des stations terrestres de transmission, en cas de transmissions numériques discontinues où les stations terrestres ont accès par répartition dans le temps aux respectifs canaux de transmission, les symboles régénérés étant présents en même temps que les signaux d'horloge terrestres, caractérisé en ce qu'il comporte les opérations suivantes:

— révéler une discontinuité de phase ou une absence de signal dudit horloge terrestre pour détecter le début d'une émission;

— engendrer une première forme d'onde (6) à fréquence double de la fréquence de l'horloge de bord;

— invertir ladite première forme d'onde (6) pour engendrer une deuxième forme d'onde (9) également à fréquence double de l'horloge de bord;

— mémoriser, pendant toute une émission, la valeur logique présentée par une desdites formes d'onde (6, 9) à l'instant central de la période du premier symbole reçu (S0);

— choisir l'une ou l'autre desdites formes d'onde d'après la valeur logique mémorisée;

— obtenir de la forme d'onde choisie une troisième forme d'onde, (12) ayant la même fréquence que l'horloge de bord et une phase telle que les flancs avant soient écartés des multiples entiers de la période de symbole du flanc avant (t3) de la forme d'onde chosie qui est éloigné de l'instant central de la période du premier symbole échantillonné moins d'1/4 de la période de l'horloge terrestre;

— échantillonner, en correspondance des flancs avant de ladite troisième forme d'onde (12), les symboles régénérés (1), de façon à obtenir une trame où les échantillons donnent des symboles (13, S'1, S'2) qui se succèdent à une fréquence égale à la fréquence de l'horloge de bord et une phase dépendant de la phase de l'horloge terrestre;

— extraire de ladite première forme d'onde une quatrième forme d'onde (14) dont la fréquence et la phase coïncident avec la fréquence et la phase de l'horloge de bord;

— échantilloner, en correspondance des flancs avant de cette quatrième forme d'onde, les symboles obtenus de l'échantillonage selon la troisième forme d'onde (12), de façon à obtenir une trame où les échantillons constituent des symboles (3, S''1; S''2 . . . ) qui se succèdent à la même fréquence et à la même phase de l'horloge de bord.

2. Dispositif pour réaliser le procédé selon la revendication 1, caractérisé en ce qu'il comprend:

— un détecteur de discontinuité (RD) qui reconnaît l'éventuelle discontinuitè entre deux émissions ou trames successives de symboles régénérés (2), et émet un premier et un deuxième signal de sortie (4, 5) qui ont valeur 0 pendant ladite discontinuité et passent à 1 en correspondance l'un du premier flac avant (t2) et l'autre du premier flanc arrière (tl) du signal d'horloge terrestre successif au début d'une émission;

— un premier et un deuxième registre (RE1, RE2), qui mémorisent ensemble, pendant une émission ou une trame entière, la valeur logique qu'une première forme d'onde (6), à fréquence double de la fréquence du signal d'horloge de bord (ts), présente en correspondance de l'instant central de la période du symbole reçu (1);

— un multiplexeur (MUX) à deux entrées et une sortie, qui, d'après la valeur (7, 8) mémorisée dans lesdits registres (RE1, RE2), présente à la sortie la première forme d'onde (6) à fréquence double de la fréquence du signal d'horloge de bord, ou une deuxième forme d'onde (9), avec la même fréquence mais déphasée d'1/4 de la période de l'horloge de bord;

— un premier diviseur de fréquence (D1), qui divise par 2 la fréquence du signal de sortie (10) du multiplexeur (MUX);

— un troisième registre (RE3) qui présente à la sortie (13, S'1, S'2...), d'après la commande du signal (12) engendré par ledit diviseur de fréquence (D1) les symboles régénerés (1, S1, S2 . . .) présents à son entrées;

— un deuxième diviseur de fréquence (D2), qui divise par 2 la fréquence de la première forme d'onde (6) et émet un signal (14) qui constitue le signal de l'horloge de bord;

— un quatrième registre (RE4), qui échantillonne les bits (S'1, S'2 . . .) sortant dudit troisième registre d'après la commande du signal de sortie (14) du deuxième diviseur (D2) et émet les symboles régénerés, (3, S''1, S''2), suivant un rythme synchronisé avec le signal d'horloge de bord.

## Patentansprüche

1. Verfahren zum Synchronisieren von Informationssymbolen (S0, S1, S2, S3, S4 . . .) mit der Taktung eines Bord-Taktsignals eines regenerativen Satelliten, der Schübe (bursts) von Informationssignalen, die aus Informationssymbolen und einer Erd-Taktinformation bestehen, empfängt, bei diskontinuierlichen digitalen Übertragungen, bei denen die Erdstationen zeitmultiplexen Zugriff zu den jeweiligen Übertragungskanälen haben, wobei die Informationssymbole mit der Taktung der sendenden Erdstationen regeneriert werden und die regenerierten Symbole gleichzeitig mit den Erd-Taktsignalen auftreten, dadurch gekennzeichnet, daß man:

— zum Erkennen des Beginns der Sendung des Informationsschubs eine Phasendiskontinuität oder die Abwesenheit des Signals in der Erd-Taktung feststellt;

— einen ersten Signalverlauf (6) erzeugt, der eine Frequenz gleich der doppelten Bord-Taktfrequenz aufweist;

— diesen ersten Signalverlauf (6) zum Erzeugen eines zweiten Signalverlaufs (9) mit einer Frequenz gleich der doppelten Bord-Taktfrequenz invertiert;

— für die gesamte Dauer des Informationsschubs den booleschen Wert speichert, den einer dieser Signalverläufe (6, 9) in der zeitlichen Mitte der ersten empfangenen Symbolperiode (S0) aufweist;

— auf der Basis des gespeicherten booleschen Werts einen dieser Signalverläufe auswählt;

— vom ausgewählten Signalverlauf einen dritten Signalverlauf (12) extrahiert, dessen Frequenz gleich der Bord-Taktfrequenz ist und dessen Phase so ist, daß seine vorderen Flanken von der vorderen Flanke ($t_3$) des ausgewählten Signalverlaufs, die von der zeitlichen Mitte der ersten abgetasteten Symbolperiode (S1) einen zeitlichen Abstand aufweist, der kleiner ist als ein Viertel der Periode des Erd-Taktsignals, einen Abstand gleich ganzzahligen Vielfachen der Symbolperiode haben;

— mit den vorderen Flanken des dritten Signalverlaufs (12) die regenerierten Symbole (1) abtastet und so einen Rahmen erhält, in dem diese Abtastungen Symbole (13; S'1, S'2,...) ergeben, die mit einer Frequenz gleich der Bord-Taktfrequenz und mit einer von der Erd-Taktphase abhängigen Phase auftreten;

— vom ersten Signalverlauf einen vierten Signalverlauf (14) extrahiert, dessen Frequenz und dessen Phase mit der Frequenz und Phase des Bord-Taktsignals übereinstimmen;

— mit den vorderen Flanken dieses vierten Signalverlaufs (14) die Symbole abtastet, die als Ergebnis der mit dem dritten Signalverlauf (12) durchgeführten Abtastung erhalten wurden, und so einen Rahmen erhält, in dem diese Abtastungen Symbole (3; S''1, S''2 . . .) ergeben, die mit gleicher Frequenz und mit gleicher Phase wie das Bord-Taktsignal auftreten.

2. Vorrichtung zur Durchführung des Verfahrens nach Anspruch 1, gekennzeichnet durch die folgenden Baugruppen;

— einen Diskontinuitätsdetektor (RD), der die mögliche Diskontinuität zwischen zwei Informationsschüben oder aufeinanderfolgenden Rahmen regenerierter Symbole (2) erkennt und ein erstes und ein zweites Ausgangssignal (4, 5) erzeugt, die während der Diskontinuitäten 0 sind und von denen das eine mit der ersten vorderen Flanke ($t_2$) und das andere mit der ersten hinteren Flanke ($t_1$) des Erd-Taktsignals anschließend an den Beginn des Informationsschubs zu 1 werden;

— ein erstes und ein zweites Register (RE1, RE2), die zusammen für die gesamte Dauer eines Informationsschubs oder eines Rahmens den booleschen Wert speichern, den ein erster Signalverlauf (6) mit einer im Vergleich zur Frequenz des Bord-Taktsignals ($t_5$) doppelten Frequenz in Übereinstimmung mit dem zentralen Zeitpunkt der Periode des empfangenen Symbols (1) aufweist;

— einen Multiplexer (MUX) mit zwei Eingängen und einem Ausgang, der vom in den Registern (RE1, RE2) gespeicherten Wert (7, 8) gesteuert ist und zum Ausgang einen ersten Signalverlauf (6) mit einer Frequenz gleich der doppelten Bord-Taktfrequenz oder einen zweiten Signalverlauf (9) mit der gleichen Frequenz, jedoch im Vergleich zum ersten Signalverlauf um ein Viertel der Periode der Bord-Taktung verschobener Phase, durchläßt;

— einen ersten Frequenzteiler (1), der die Frequenz des vom Multiplexer (MUX) ausgehenden Signals (10) halbiert;

— ein drittes Register (RE3), das ausgangsseitig (13, S'1, S'2 . . .) auf Befehl durch das vom Frequenzteiler (D1) erhaltene Signal (12) hin die an seinem Eingang liegenden regenerierten Symbole (1, S1, S2, . . . ) abgibt;

— einen zweiten Frequenzteiler (D2), der die Frequenz des ersten Signalverlaufs (6) halbiert und ausgangsseitig ein Signal (14) abgibt, das das Bord-Taktsignal bildet;

— ein viertes Register (RE4), das die vom dritten Register ausgehenden Bits (S'1, S'2, . . . ) auf Befehl durch das vom zweiten Frequenzteiler (D2) ausgehende Signal (14) hin abtastet und ausgangsseitig die regenerierten Symbole (3, S''1, S''2, . . . ) in einem auf das Bord-Taktsignal abgestimmten Takt abgibt.

Fig. 1

Fig.2

Fig. 3